# EUROPEAN PATENT APPLICATION

(11) **EP 4 651 143 A1**
(43) Date of publication of application: **19.11.2025**
(21) Application number: 25175578.1
(22) Date of filing: 12.05.2025
(51) Int. Cl.: G11C 29/44, G11C 29/00

(54) **POST PACKAGE REPAIR OF MEMORY WITH DATA CORRUPTION SYSTEMS AND METHODS**

(30) Priority: 15.05.2024 US 202463647682 P; 25.07.2024 US 202418784456
(71) Applicant: Micron Technology, Inc, Boise ID 83707 (US)
(72) Inventor: Kerstetter, Bryan David, BOISE, 83707 (US); Morgan, Donald M., BOISE, 83707 (US); Wilson, Alan J., BOISE, 83707 (US); Li, Qidao, BOISE, 83707 (US); Cook, Bryce D., BOISE, 83707 (US)
(74) Representative: Pio, Federico

(57) **Abstract**

A memory device may sometimes undergo post package repair. Systems and methods described herein may help protect data and/or configurations of the memory device from external exploit of the post package repair operations. Systems and methods described herein enable receiving a post package repair command and an indication of a target memory address, performing data corruption on a target portion of memory based on the target memory address, and performing post package repair on the target portion of memory based on the target memory address.

## Description

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light and not as admissions of prior art.

The following generally relates to electronic devices and, more specifically, to security circuits used in various electronic devices. An electronic device may include a memory device, a processing device, and routing circuitry, among other things. For example, the memory device may include a number of memory arrays including memory cells, a row decoder, and a column decoder, among other memory components, to perform memory operations including memory read and write operations. Moreover, various circuit components of the electronic device, including the memory components, may provide one or more signals for performing the memory operations.

Due to manufacturing errors, degradation over time, and/or failures, certain memory cells may be defective. Quality control testing may be used to identify rows and/or columns containing such defective memory cells. If the number of defective memory cells is small, a prepackaging re-assignment of memory cells may be used to prevent discarding of otherwise functional devices. In such systems, additional addressable data cells (e.g., redundant rows and/or columns) may be made available during manufacturing and the address associated with a defective row and/or column may be reassigned to a redundant row and/or column. In order to increase the lifetime of the memory devices in the presence of these defects, repair methods, such as post package repair (PPR) methods, may be employed to repair the memory device. Methods and systems to perform repairs may include reassignment of the address associated with a row and/or column. However, data associated with the repair, like data stored in the memory device or configurations of the PPR method, may be at risk of being exploited as part of a row hammer or wear leveling attack.

### BRIEF DESCRIPTION OF THE DRAWINGS

Various aspects of this disclosure may be better understood upon reading the following detailed description and upon reference to the drawings in which:

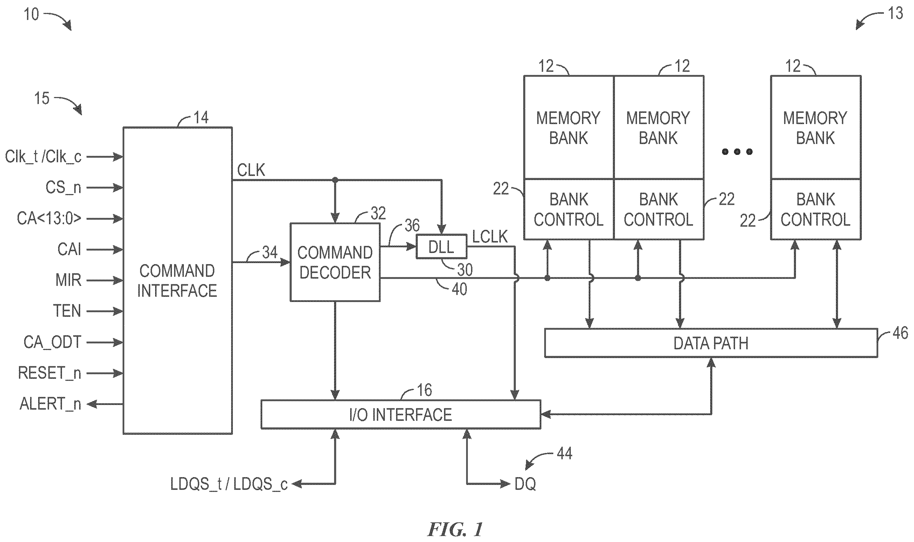

FIG. 1 is a block diagram illustrating an organization of a memory device that includes memory bank control circuitry that may implement memory repair (e.g., post-package repair (PPR) and/or other repairs) using redundant rows of memory cells, in accordance with an embodiment;

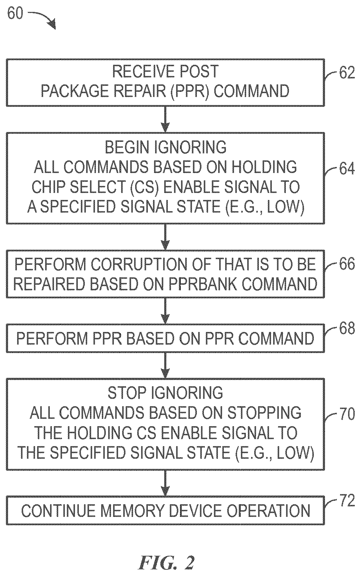

FIG. 2 is a diagram illustrating a flow chart of a method of performing data corruption operation (e.g., corrupting some or all of the data of a portion of a memory bank to be prepared for post package repair) before performing post package repair on a portion of the memory bank of FIG. 1, in accordance with an embodiment; and

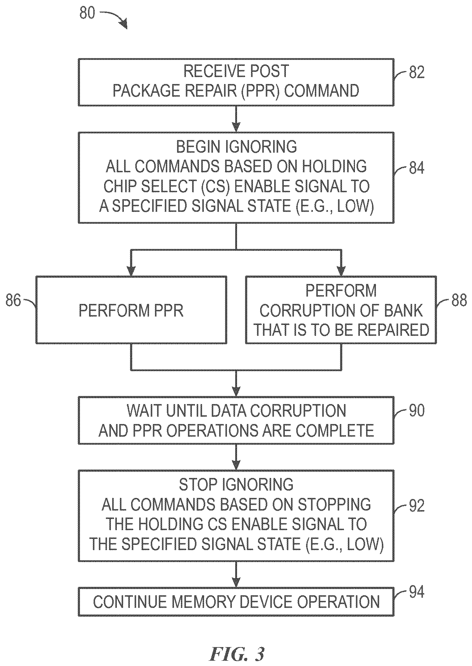

FIG. 3 is a diagram illustrating a flow chart of a method of performing a data corruption operation (e.g., corrupting some or all of the data of a portion of a memory bank to be prepared for post package repair) at a same or overlapping time as performing post package repair on a portion of the memory bank of FIG. 1, in accordance with an embodiment.

### SUMMARY

The invention is as defined in independent claims; optional embodiments are defined in dependent claims.

### DETAILED DESCRIPTION

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. One or more specific embodiments of the present embodiments described herein will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Many electronic systems may employ memory devices to provide data storage functionalities and/or facilitate the performance of data processing operations. Several memory devices may perform storage using electronic memory cells, such as capacitors, flip-flops, latches and/or inverter loops, among others. Examples of memory devices include random access memories (RAMs) devices, dynamic RAM (DRAMs) devices, static RAM (SRAMs) devices, and/or flash memories. In such systems, the memory cells may be grouped in memory arrays, which may be addressed in groups (e.g., rows and/or columns). In the present application, the descriptions of the embodiments are related to memory arrays containing memory cells organized in rows (e.g., data rows). It should be understood that the methods and systems described herein may be used in memory devices having memory cells organized in columns.

During certain operations, such as reading and writing operations, a controller in the memory device may receive an address for a memory cell. The memory device controller may determine which memory bank contains the requested memory cell and request access from the corresponding memory bank controller. In turn, the memory bank controller may identify and activate the data row containing the requested memory cell, to perform the requested operation. In certain memory devices, the memory bank may include additional data rows, which may be redundant rows that may be used for memory repairs, such as Post Package Repair (PPR), as detailed below. Following manufacturing, defective rows (e.g., data rows containing defective cells) may be identified during pre-package tests. If a defective row is identified, the defective row may be deactivated and a redundant row may be used in its place. To that end, a non-volatile memory system may store information such as the assigned address of the defective row, and the address of the redundant row to be used in its place. Such repair is described herein as redundant row repair. Redundant row repair may occur while a memory device is still with the manufacturer. Further repair of data rows may take place in the field, for example, as post-package repair by assigning a defective row to a PPR row. Although the following discussion contemplates applying address duplication as part of PPR, some embodiments of memory devices may apply the techniques described herein to other repair techniques in addition to or alternative to PPR repairs.

Post Package Repair (PPR) may be a Hard Post Package Repair (hPPR), or Soft Post Package Repair (sPPR), or the like, and may be performed while the memory device is with the manufacturer. PPR may additionally and/or alternatively be performed while the memory device is in the hands of the user or consumer (while, for example, other types of repair including those discussed above are typically not available to the user or customer). hPPR or sPPR may take place by storing the address of a defective row in a memory and rerouting requests from the defective row to a PPR row. sPPR may be performed when a repair is to occur and the memory device is not yet able or desired to be power cycled to perform the repair. hPPR may be performed when a repair is to occur and the memory device is able and desired to be power cycled to perform the repair. sPPR may be temporary in nature, where the original row and address assignments are returned to the original assignment after power cycle. hPPR may be permanent in nature, where fuses and/or antifuses are used to permanently repair and reroute the defective row to a PPR row.

Keeping the foregoing in mind, the present disclosure is generally directed to Alert Soft Post Package Repairs (ASPPR) and PPR. Although referred to herein as PPR, it should be understood that PPR may include Hard PPR (hPPR) that involves a relatively permanent repair to occur, such as blowing a fuse or other suitable operation. ASPPR and other sPPR may involve a relatively less permanent repair compared to hPPR and be able to be performed in a relatively shorter time period.

Elaborating on ASPPR, a controller may monitor a memory to track perform or otherwise identify data or rows to be repaired. In this monitoring, bad pages of data (e.g., data associated with a single logical row address) may be identified by the controller. The controller may provide a row address and a bad page command. The bad page command may use existing communication architecture. For example, the controller may provide the row address and a row activate command over a command/address (CA) bus and may set a bad page flag in a mode register associated with the memory device. The bad page flag being set may indicate that the address provided along the bus is for an ASPPR operation and not for accessing. The logical address may be provided via address bussing through the memory to bank logic, which may include a word line circuit to convert the received logical address to a physical address. An ASPPR register may store the physical address. The physical address is saved rather than the logical address. Thus, even if the relationship between physical and logical addresses is remapped (e.g., as part of wear leveling), the proper physical address associated with the defective word line will be saved. If a subsequent hPPR is performed, and the bad page flag is set, indicating that an ASPPR operation was previously performed, then the saved physical address in the ASPPR register may be used for the hard repair (e.g., by blowing one or more fuses based on the stored physical address). The bad page flag may be unset after the PPR operation, indicating that the saved physical address in the ASPPR register may not be used.

The use of the command/address bus and row address bus in the memory may allow the physical address to be saved to the ASPPR in a relatively faster time period than a time period used to load the SPPR address through a fuse logic scan operation. For example, loading the word address to the ASPPR latches may take approximately the same amount of time or less as a memory access operation (e.g., the timing of tRAS). In some embodiments, the data from the failed word line may be rewritten to the redundant word line, which may help preserve data in the memory. However, certain circumstances may exist where these schemes may be exploited to effectuate a wear leveling attack.

ASPPR is described herein and should be understood as an example of a type of soft PPR (sPPR) performed. Any suitable sPPR may be used. ASPPR operations may be faster to perform than some sPPR operations and have the added benefit of being performed using systems that automatically capture the physical address (e.g., the word line) to be repaired without having to transmit an additional command or capture an output. With each request, the ASPPR occurs relative to a logical address, causing a soft repair to occur and the physical address associated with that logical address to be recorded in the ASPPR register. A bad actor may write an entire memory bank to all ones and instruct one or more wear leveling movements to guarantee each page has been wear leveled at least once.

The wear leveling described above may be an algebraic wear leveling to mitigate wear on the memory device. A row address scramble operation may also be implemented to try to improve the efficacy of wear leveling and help protect against wear leveling attacks and/or row hammer attacks. Indeed, PPR makes a permanent repair by blowing fuses to replace an element in a memory array with a redundant element. Some DRAM specifications do not allow refresh commands during PPR. Array contents for the entire die or the bank under repair are not guaranteed due to refresh requirements not being met. Furthermore, an emerging memory device (e.g., a newly developed, recently released or to be released memory device) may have relaxed refresh requirements or may be non-volatile. An emerging memory device could include a Double Data Rate Type Five Synchronous Double Data Rate Dynamic Random Access Memory (DDR5SDRAM) device memory, Low Power Double Data Rate (LPDDR5) memories, any device that could be retrofitted to use hPPR, or the like. In which case, the array contents for the non-repaired banks may be guaranteed after a PPR. For the bank that is under repair, the data that resided on the array element that was replaced is lost. The quantity of lost data is related to the granularity of the PPR which may include one or more pages. Due to the data of the redundant elements being initialized to zero, each page replaced when read results in zero read data. ASPPR may enable a result in successful PPR despite wear leveling. ASPPR may be required on a logical address, and a soft repair may occur on one or more requested pages. Physical addresses, and the associated logical addresses (e.g., before repair, after repair), associated with the one or more requested pages may be recorded. When a subsequent PPR is performed, the repair occurs on the previously recorded physical address of the one or more requested pages. Further, when a read or write is performed, the read or write may occur on the previously recorded physical address when the new logical address is referenced by the associated command.

For example, in an emerging memory system case, the ASPPR request may be repeated over time. An emerging memory device may be non-volatile memory that may be used to emulate volatile memory or as non-volatile memory. To emulate volatile memory, the emerging memory device may, at power up, clear data stored in the memory banks. The emerging memory device may be operated as volatile memory or non-volatile memory based on a flag being set in a control register, a portion of a memory outside of the memory banks, an identifier fuse being blown, or the like. Memory management commands may be issued to trigger a respective wear leveling movement. Later, a PPR may be performed. After a PPR is performed, the pages that were repaired may be identified by the pages with all zeros data. The difference between the logical address of the requested ASPPR versus the addresses that were repaired by PPR may give insight regarding the row address scramble and the wear leveling scheme. After such insight, one may be able to circumnavigate the row address scramble and wear leveling scheme to prematurely wear out the memory device.

Systems and methods described herein may provide a solution that reduces a likelihood of a bad actor gaining insight into the internal row address scramble and wear leveling scheme after an ASPPR and PPR are issued. Indeed, when considering emerging memory devices that emulate volatile memory, the clear data operation (e.g., to emulate volatile memory) completes before a command mask is stopped, thereby keeping the PPR configurations safer from exploit. Furthermore, when considering emerging memory devices operated as non-volatile memory, to protect PPR configurations from exploit, data corruption may occur before PPR is finished being performed such that any current profiles accessible after PPR are relatively more protected under data corruption.

Similar systems and methods can be applied to DRAM memory as well. Indeed, in a DRAM system case, some DRAMs also implement a row address scramble, such as for security purposes (e.g., protecting against row hammer attacks). To exploit the DRAM, a bad actor may place the DRAM into a cold environment, which enables increased retention time due to material properties of the DRAM and how it changes with ambient temperature changes. Once in a cold environment, the DRAM may be operated to repeat performing PPR (e.g., hPPR, sPPR, ASPPR). After each time the PPR is performed, the pages that were repaired may be identified by comparing the array contents before the PPR and the array contents after the PPR. The difference in the array contents before and after the PPR would enable one to gain insight into the row address scramble. After the row address scramble is deciphered, one may better target a row hammer attack. With the row address scramble deciphered, one would better understand where the victims would be of a targeted row. If there are a relatively few number of scramble possibilities, what is learned in a cold environment could be used for all DRAM dies with the same scramble circuit in any environment (e.g., any temperature as opposed to just cold temperatures). Systems and methods described herein may provide a solution that reduces a likelihood of a bad actor gaining insight into the internal row address scramble after a PPR is issued based on having data corruption finish before PPR is finished on the targeted portion of the DRAM.

Indeed, systems and methods described herein may intentionally corrupt data residing within a bank and perform PPR on the bank, which may reduce a likelihood of a bad actor exploiting PPR operations to gain insights into memory data and/or configurations. In some cases, the corruption of bank data may occur before performing PPR on the bank, such as described below relative to at least FIG. 2. In some cases, the corruption of data may occur concurrent or at an at least partially overlapping time as performing PPR on the bank, such as described below relative to at least FIG. 3. In some cases, the corruption of data may occur after performing PPR on the bank. It is noted that corrupting data after performing PPR may, in other cases, fails to solve the issue based on how a current profile may be observed to identify when PPR is complete and power may be removed after PPR to circumnavigate the data corruption. The data corruption described herein may include any suitable corruption operations performed relative to a targeted set of data, such as a target memory bank, including, for example, writing data in a targeted memory bank to either ones or zeros, generating new scramble key and wear leveling pointers for the targeted memory bank, or the like. Some data corruption systems and methods may be more suitable for certain types of memory. For example, generating new scramble key and wear leveling pointers for the targeted memory bank may be suitably applied to emerging memory examples. By using systems and methods described herein, increased memory device security may be realized while also maintaining and increasing reliability and overall life span of the memory device. Furthermore, systems and methods described herein may reduce a likelihood that a wear leveling attack attempt and/or a row hammer attack is successful based on obscuring PPR repair size granularity, protecting logical-to-physical address mapping data, protecting row address scramble configurations, and/or protecting wear leveling operations configurations.

Turning now to the figures, FIG. 1 is a simplified block diagram illustrating certain features of a memory device 10. Specifically, the block diagram of FIG. 1 is a functional block diagram illustrating certain functionality of the memory device 10. In accordance with one embodiment, the memory device 10 may be a double data rate type five synchronous double data rate dynamic random access memory (DDR5 SDRAM) device. Various features of DDR5 SDRAM may permit reduced power consumption, more bandwidth, and more storage capacity compared to prior generations of DDR SDRAM.

The memory device 10, may include a number of memory banks 12. The memory banks 12 may be DDR5 SDRAM memory banks, for instance. The memory banks 12 may be provided on one or more chips (e.g., SDRAM chips) that are arranged on dual inline memory modules (DIMMs). Each DIMM may include a number of SDRAM memory chips (e.g., x8 or x16 memory chips), as will be appreciated. Each SDRAM memory chip may include one or more memory banks 12. The memory device 10 represents a portion of a single memory chip (e.g., SDRAM chip) having a number of memory banks 12. For DDR5, the memory banks 12 may be further arranged to form bank groups. For instance, for an 8 gigabit (Gb) DDR5 SDRAM, the memory chip may include 16 memory banks 12, arranged into 8 bank groups, each bank group including 2 memory banks. For a 16 Gb DDR5 SDRAM, the memory chip may include 32 memory banks 12, arranged into 8 bank groups, each bank group including 4 memory banks, for instance. Various other configurations, organization and sizes of the memory banks 12 on the memory device 10 may be utilized depending on the application and design of the overall system. Furthermore, DDR5 SDRAM configurations are discussed by way of example, but it is understood that various other memory specifications such as past and evolving DDR and low power DDR (LPDDR) configurations have similar functions and may likewise benefit from the circuits and methods described herein. As such depending upon the specific DDR specification, various components of FIG. 1 may be altered to comply with the specification. For instance, some specifications may result in the memory device requiring a DLL 30 while other specifications may result in the memory device not requiring a DLL 30. Or in another instance, various input and output interfaces may be implemented on the memory device while adhering to the specific specification.

The memory device 10 may include a command interface 14 and an input/output (I/O) interface 16 configured to exchange (e.g., receive and transmit) signals with external devices. The command interface 14 is configured to provide a number of signals (e.g., signals 15 from an external device (not depicted), such as a processor or controller. The processor or controller may provide various signals 15 to the memory device 10 to facilitate the transmission and receipt of data to be written to or read from the memory device 10. As an example of signals 15, the processor or controller may request a read and/or write operation by providing the corresponding command and an address via the CA bus. A chip select (CS) enable signal (e.g., CS_n signal) may be held high (e.g., logical high, logical high voltage level) by the processor or controller when the command is provided by the processor or controller.

As will be appreciated, the command interface 14 may include a number of circuits, such as a clock input circuit and a command address input circuit, for instance, to permit proper handling of the signals 15. The command interface 14 may receive one or more clock signals from an external device. Generally, double data rate (DDR) memory utilizes a differential pair of system clock signals, referred to as the true clock signal (Clk_t) and the complementary clock signal (Clk _c). The positive clock edge for DDR refers to the point where the rising true clock signal (Clk_t) crosses the falling complementary clock signal (Clk_c), while the negative clock edge indicates that transition of the falling true clock signal (Clk_t) and the rising of the complementary clock signal (Clk_c). Commands (e.g., read command, write command, refresh command) are typically entered on the positive edges of the clock signal and data is transmitted or received on both the positive and negative clock edges.

The clock input circuit 18 receives the true clock signal (Clk_t) and the complementary clock signal (Clk_c) and generates an internal clock signal (CLK). The internal clock signal (CLK) may be supplied to an internal clock generator 30, such as a delay locked loop (DLL) circuit. The internal clock generator 30 generates a phase controlled internal locked clock signal (LCLK) based on the received internal clock signal (CLK). The phase controlled internal locked clock signal (LCLK) is supplied to the I/O interface 16, for instance, and is used as a timing signal for determining an output timing of read data.

The internal clock signal (CLK) may also be provided to various other components within the memory device 10 and may be used to generate various additional internal clock signals. For instance, the internal clock signal (CLK) may be provided to a command decoder 32. The command decoder 32 may receive command signals from the command/address (CA) bus 34 and may decode the command signals to provide various internal commands. For instance, the command decoder 32 may provide command signals to the internal clock generator 30 over the bus 36 to coordinate generation of the phase controlled internal locked clock signal (LCLK). The phase controlled internal locked clock signal (LCLK) may be used to clock data through the I/O interface 16, for instance.

The command decoder 32 may decode commands, such as read commands, write commands, mode-register set commands, activate commands, or the like, and provide access to a particular memory bank 12 corresponding to the command via the bus path 40. As will be appreciated, the memory device 10 may include various other decoders, such as row decoders and column decoders, to facilitate access to the memory banks 12. In one embodiment, each memory bank 12 includes a bank control block 22 which provides the necessary decoding (e.g., row decoder and column decoder), as well as other operations, such as timing control and data control, to facilitate the execution of commands to and from the memory banks 12. Collectively, the memory banks 12 and the bank control blocks 22 may be referred to as a memory array 13.

The memory device 10 executes operations, such as read commands and write commands, based on the command/address signals received from an external device, such as a processor. In one embodiment, the command/address bus may be a 14-bit bus to accommodate the command/address signals (CA<13:0>). The command/address signals are clocked to the command interface 14 using the clock signals (Clk_t and Clk_c). The command interface may include a command address input circuit 20 which is configured to receive and transmit the commands to provide access to the memory banks 12, through the command decoder 32, for instance. In addition, the command interface 14 may receive a chip select signal (CS_n). The CS_n signal causes the memory device 10 to process commands on the incoming CA<13:0> bus. Access to specific memory banks 12 within the memory device 10 is encoded on the CA<13:0> bus with the commands.

In addition, the command interface 14 may be configured to receive a number of other command signals. For instance, a command/address on-die termination (CA_ODT) signal may be provided to facilitate proper impedance matching within the memory device 10. A reset command (RESET_n) may be used to reset the command interface 14, status registers, state machines and the like, during power-up for instance. The command interface 14 may also receive a command/address invert (CAI) signal which may be provided to invert the state of command/address signals (CA<13:0>) on the command/address bus, for instance, depending on the command/address routing for the particular memory device 10. A mirror (MIR) signal may also be provided to facilitate a mirror function. The MIR signal may be used to multiplex signals so that they may be swapped for enabling certain routing of signals to the memory device 10, based on the configuration of multiple memory devices in a particular application. Various signals to facilitate testing of the memory device 10, such as the test enable (TEN) signal, may be provided, as well. For instance, the TEN signal may be used to place the memory device 10 into a test mode for connectivity testing.

The command interface 14 may also be used to provide an alert signal (ALERT_n) to the system processor or controller for certain errors that may be detected. For instance, an alert signal (ALERT_n) may be transmitted from the memory device 10 if a cyclic redundancy check (CRC) error is detected. Other alert signals may also be generated. Further, the bus and pin for transmitting the alert signal (ALERT_n) from the memory device 10 may be used as an input pin during certain operations, such as the connectivity test mode executed using the TEN signal, as described above.

Data may be sent to and from the memory device 10, utilizing the command and clocking signals discussed above, by transmitting and receiving data signals 44 through the I/O interface 16. More specifically, the data may be sent to or retrieved from the memory banks 12 over the data path 46, which includes a plurality of bi-directional data buses. Data I/O signals, generally referred to as DQ signals, are generally transmitted and received in one or more bi-directional data busses. For certain memory devices, such as a DDR5 SDRAM memory device, the I/O signals may be divided into upper and lower bytes. For instance, for a x16 memory device, the I/O signals may be divided into upper and lower I/O signals (e.g., DQ<15:8> and DQ<7:0>) corresponding to upper and lower bytes of the data signals, for instance.

To permit higher data rates within the memory device 10, certain memory devices, such as DDR memory devices may utilize data strobe signals, generally referred to as data strobe (DQS) signals. The DQS signals are driven by the external processor or controller sending the data (e.g., for a write command) or by the memory device 10 (e.g., for a read command). For read commands, the DQS signals are effectively additional data output (DQ) signals with a predetermined pattern. For write commands, the DQS signals are used as clock signals to capture the corresponding input data. As with the clock signals (Clk_t and Clk_c), the DQS signals may be provided as a differential pair of data strobe signals (DQS_t and DQS_c) to provide differential pair signaling during reads and writes. For certain memory devices, such as a DDR5 SDRAM memory device, the differential pairs of DQS signals may be divided into upper and lower data strobe signals (e.g., UDQS_t and UDQS_c; LDQS_t and LDQS_c) corresponding to upper and lower bytes of data sent to and from the memory device 10, for instance.

An impedance (ZQ) calibration signal may also be provided to the memory device 10 through the I/O interface 16. The ZQ calibration signal may be provided to a reference pin and used to tune output drivers and on-die termination (ODT) values by adjusting pull-up and pull-down resistors of the memory device 10 across changes in process, voltage and temperature (PVT) values. Because PVT characteristics may impact the ZQ resistor values, the ZQ calibration signal may be provided to the ZQ reference pin to be used to adjust the resistance to calibrate the input impedance to known values. A precision resistor may be coupled between the ZQ pin on the memory device 10 and ground (GND) or low supply voltage (VSS) (GND/VSS) external to the memory device 10. This resistor acts as a reference for adjusting internal on die termination (ODT) and drive strength of I/O pins.

In addition, a loopback signal (LOOPBACK) may be provided to the memory device 10 through the I/O interface 16. The loopback signal may be used during a test or debugging phase to set the memory device 10 into a mode where signals are looped back through the memory device 10 through the same pin. For instance, the loopback signal may be used to set the memory device 10 to test the data output of the memory device 10. Loopback may include both a data and a strobe, or possibly a data pin to provide the data and/or the strobe. This is generally intended to be used to monitor the data captured by the memory device 10 at the I/O interface 16.

Various other components such as power supply circuits (for receiving external high power supply (VDD) and VSS signals), mode registers (to define various modes of programmable operations and configurations), read/write amplifiers (to amplify signals during read/write operations), temperature sensors (for sensing temperatures of the memory device 10), or the like, may also be incorporated into the memory device 10. Accordingly, it should be understood that the block diagram of FIG. 1 is only provided to highlight certain functional features of the memory device 10 to aid in the subsequent detailed description.

In some embodiments, the memory device 10 may be disposed in (physically integrated into or otherwise connected to) a host device or otherwise coupled to a host device. The host device may include any one of a computing system, desktop computer, laptop computer, pager, cellular phone, personal organizer, portable audio player, control circuit, camera, or the like. The host device may also be a network node, such as a router, server, or client (e.g., one of the previously-described types of computers). The host device may be some other sort of electronic device, such as a(n) copier, scanner, printer, game console, television, set-top video distribution or recording system, cable box, personal digital media player, factory automation system, automotive computer system, medical device, or the like. The terms used to describe these various examples of systems, like many of the other terms used herein, may share some referents and, as such, should not be construed narrowly in virtue of the other items listed.

Thus, the host device may generally be a processor-based device, which may include a processor, such as a microprocessor, that controls the processing of system functions and requests in the host device. Further, any host processor may include multiple processors that share system control. The host processor may be coupled directly or indirectly to additional system elements of the host device, such that the host processor controls the operation of the host device by executing instructions that may be stored within the host device or external to the host device.

As discussed above, data may be written to and read from the memory device 10, such as by the host device, whereby the memory device 10 operates as volatile memory, such as Double Data Rate DRAM (e.g., DDR5 SDRAM). The host device may, in some embodiments, also include separate non-volatile memory, such as read-only memory (ROM), random access memory (RAM), phase change RAM (PC-RAM), silicon-oxide-nitride-oxide-silicon (SONOS) memory, metal-oxide-nitride-oxide-silicon (MONOS) memory, polysilicon floating gate based memory, and/or other types of flash memory of various architectures (e.g., not-AND (NAND) memory, not-OR (NOR) memory, etc.) as well as other types of memory devices (e.g., storage), such as solid state drives (SSDs), MultimediaMediaCards (MMCs), SecureDigital (SD) cards, CompactFlash (CF) cards, or any other suitable device. Further, it should be appreciated that the host device may include one or more external interfaces, such as Universal Serial Bus (USB), Peripheral Component Interconnect (PCI), PCI Express (PCI-E), Small Computer System Interface (SCSI), Institute of Electrical and Electronics Engineers (IEEE) 1394 (Firewire), or any other suitable interface as well as one or more input devices to permit a user to input data into the host device, such as by using buttons, switching elements, a keyboard, a light pen, a stylus, a mouse, and/or a voice recognition system. The host device may optionally also include an output device, such as a display coupled to the processor and a network interface device, such as a Network Interface Card (NIC), for interfacing with a network, such as the Internet. As will be appreciated, the host device may include many other components, depending on the application of the host device.

It is noted that memory device 10 may be an emerging memory device. The emerging memory device may include non-volatile memory. The emerging memory device may emulate volatile memory based on refresh and/or data wipe operations and timing relative to power on operations. The memory device 10 may include a double data rate type five synchronous double data rate dynamic random access memory (DDR5 SDRAM) device memory, any device that could be retrofitted to use hPPR, dynamic random access memory (DRAM), or the like.

The host device may operate to transfer data to the memory device 10 for storage and may read data from the memory device 10 to perform various operations at the host device. Accordingly, to facilitate these data transmissions, in some embodiments, the I/O interface 16 may include a data transceiver that operates to receive and transmit DQ signals to and from the I/O interface 16.

As described above, FIG. 2 is a diagram illustrating a flow chart of a method 60 of corrupting data before performing PPR on a portion of the memory bank 12. Although the method 60 is described as being performed by circuitry of the memory device 10, it should be understood that the method 60 may be performed by some, any, or all of the components described here, such as with respect to FIG. 1. Operations of the method 60 are shown in a specific order, and it should be understood that in some systems the operations may be performed with additional or alternative operations and in a same or different order. Indeed, sometimes one or more operations may be omitted in an actual implementation.

At block 62, the memory device 10 may receive a post package repair (PPR) command. The PPR command may be received via a command/address (CA) bus 34 and the command interface 14. The PPR command may be received while a chip select (CS) enable signal (e.g., CS_n signal) is held at or pulsed to a first specified signal state, such as a logic high level (e.g., "1", logic high value, a voltage assigned to the logic high level). The PPR command may instruct PPR. The memory device 10 may receive the PPR command via the command/address signals at the command interface 14. The CS_n signal may cause the memory device 10 to process commands on the incoming CA<13:0> bus. The address signals transmitted with the PPR may indicate one or more portions of memory targeted for PPR. The one or more portions of memory may be one or more memory rows to be replaced with redundant memory. The command decoder 32 may decode the command/address signals to determine that a PPR command was instructed by a host controller and which portion of memory is targeted for PPR.

Based on the PPR command, at block 64, the memory device 10 may, via the command decoder 32, issue an activation (ACT) command with repair address and may begin ignoring commands issued to it based on holding a CS_n signal to a specified signal state. The ACT command may communicate the repair address. Thus, the ACT command may include or be the indication of the repair address. The repair address may be ignored if PPR command is received a threshold amount of time, such as next command after, after ASPPR is performed. Based on the ACT command, the memory device 10 may record bank address information and repair address information and/or initiate a command mask. In the command mask, the CS_n signal is internally held to a specified signal state. For example, the specified signal state may be a logic low level (e.g., "0", logic low value, a voltage assigned to the logic low level). By setting the CS_n signal to the specified signal state, the command interface 14 may be disabled making the memory device 10 inaccessible during the PPR. Disabling the command interface 14 while the PPR occurs may help protect the memory device 10 and data stored in the memory banks 12 during the PPR. It is noted that, in some examples, a command mask may not be used in conjunction with PPR operations. In these cases, operations of blocks 64 and 70 may be skipped or omitted.

At block 66, the memory device 10 may, via the command decoder 32, corrupt data of a memory bank 12 that is to be repaired (e.g., the portion of memory indicated via address signals at block 62). Some or all memory bank 12 data may be corrupted, where the subset corresponds to the target portion of memory subject to PPR and identified via the address signals at block 62. A threshold amount of data in addition to the target portion of memory may be targeted for data corruption. The target memory bank 12 corresponding to the target memory address of the PPR command received at block 62 may be the subject of the data corruption. In this way, other non-targeted memory banks 12 may not be corrupted, and thus be bypassed for data corruption to enable data persistence in one or more memory banks 12 other than the target memory bank 12. Any suitable data corruption may be performed. For example, the memory device 10 may write all bank data to either ones or zeros. Another data corruption operation may be the memory device 10 generating a new scramble key and wear leveling pointers for the memory bank 12, which may be used in emerging memory device systems. A combination of data corruption systems and methods, these or other suitable systems and methods, may be used. In some systems, PPR may be performed for a respective portion of the target memory bank 12 after the data corruption is performed on that respective portion, and thus concurrent data corruption operations and PPR operations may occur, where doing so may afford some increases in processing efficiencies by reducing time spent performing the method 60.

At block 68, the memory device 10 may, via the command decoder 32, perform PPR based on the portion of memory indicated by the PPR command received at block 62. The memory device 10 may perform PPR based on the recorded bank address information and repair address information from block 64. The memory device 10 may delay starting PPR until after performance of the data corruption of block 66 ends. This may be indicated via a completion indication, through tracking expected time durations, or the like. In some examples, there may be a memory management command exemption during PPR, which may aid in not interrupting or corrupting PPR results while repair is ongoing. Exempted examples of memory management commands may include command to trigger a sense and flip operation, a portion or all of a wear leveling operation, a portion or all of an error correction code (ECC) scrub operation, a refresh operation, or some other operation to maintain or manage the array data, or the like.

At block 70, the memory device 10 may, via the command interface 14, remove the command mask initiated at block 64 stop ignoring issued commands based on stopping holding the CS_n signal to the specified signal state (e.g., "0", logic low). Removing the hold on the CS_n signal state may enable the CS_n signal to toggle freely responsive to newly received commands on the command/address (CA) bus 34. Indeed, removing the hold on the CS_n signal enables the command/address (CA) bus 34. Before performing operations of block 70, the memory device 10 may confirm that PPR is complete. To do so, the memory device 10 may read an indication in memory indicating that PPR is complete.

In some systems, the CS_n signal may be input to the memory device 10 via a corresponding CS_n pin of the command interface 14. There may be an internal CS_n signal that may be forced low such that the external CS_n pin state would be unaffected. This may correspond to a signal flow that includes the memory controller driving the CS_n pin, where the memory device 10 may include, in the command interface, an input buffer to detect the CS_n state. The output of the input buffer may be an input into a logic gate, such as AND logic gate that receives another input from a CommandMaskF state. The output from this logic gate (e.g., AND logic gate) may be an internal global CS_n internal signal, which may be used throughout the memory device 10. For example, this signal may be routed to command decoder 32. A first CommandMaskF state may be a logic low level that forces CS_n_internal low to mask or ignore all commands. A second CommandMaskF may be a logic high level that permits the external CS_n pin state to dictate the CS_n_internal state. The CommandMaskF state may be forced low during command mask (e.g., during PPR operations described herein).

At block 72, based on the command interface 14 being re-enabled, the memory device 10 may, via the command interface 14 and the command decoder 32, resume facilitating normal memory device operation. For example, the memory device 10 may read or write data in a memory bank 12 responsive to a memory command received via the command interface 14.

Sometimes PPR may be performed in parallel or concurrently with the data corruption. To elaborate, FIG. 3 is a diagram illustrating a flow chart of a method 80 of corrupting data at a same or overlapping time as performing PPR on a portion of the memory bank 12. Although the method 80 is described as being performed by the memory device 10, it should be understood that the method 80 may be performed by some, any, or all of the components described here, such as with respect to FIG. 1. Operations of the method 80 are shown in a specific order, and it should be understood that in some systems the operations may be performed with additional or alternative operations and in a same or different order. Indeed, sometimes one or more operations may be omitted in an actual implementation.

At block 82, the memory device 10 may, via the command interface 14, receive a PPR command. This operation may involve the operations described relative to block 62. At block 84, the memory device 10 may, via the command interface 14, begin ignoring commands issued to it based on holding a CS_n signal to a specified signal state. This operation may involve the operations described relative to blocks 64 and 70.

At block 86, the memory device 10 may, via the command decoder 32, perform PPR based on the portion of memory indicated by the PPR command received at block 84. This operation may involve the operations described relative to block 68. At block 88, the memory device 10 may, via the command decoder 32, perform corruption of a memory bank 12 that is to be repaired. This operation may involve the operations described relative to block 66. The memory device 10 may complete performing PPR after the data corruption is performed. Indeed, the memory device 10 may perform the data corruption operations of block 88 over a first time period and may perform the PPR operations of block 86 over a second time period, where the first time period and the second time period may be at least partially overlapping or concurrent with each other. Indeed, in some systems, PPR may be performed for a respective portion of the target memory bank after the data corruption is performed on that respective portion, and thus concurrent data corruption operations and PPR operations may occur, where doing so may afford some increases in processing efficiencies by reducing time spent performing the method 80. In this way, the PPR and data corruption may respectively start at least partially occurring at contemporaneous times and, since data corruption may have a relative shorter completion duration than PPR from a device operational standpoint, the data corruption may complete before PPR completes.

At block 90, the memory device 10 may, via the command decoder 32, wait until data corruption and PPR operations are complete. The memory device 10 may monitor for one or more flags indicating that one or both operations have completed. Data corruption may be completed before PPR. This may contribute to ensure that, by the time a current profile associated with the memory device 10 indicates that PPR is complete, the data in the memory device 10 is secured against potential unauthorized inspection.

At block 92, the memory device 10 may, via the command interface 14, stop ignoring issued commands based on stopping holding the CS_n signal to the specified signal state (e.g., "0", logic low). This operation may involve the operations described relative to blocks 64 and 70.

It is noted that, in some examples, a command mask may not be used in conjunction with PPR operations. In these cases, operations of blocks 84 and 92 may be skipped or omitted.

Furthermore, it is noted that in some systems, the CS_n signal may be input to the memory device 10 via a corresponding CS_n pin of the command interface 14. There may be an internal CS_n signal that may be forced low such that the external CS_n pin state would be unaffected. This may correspond to a signal flow that includes the memory controller driving the CS_n pin, where the memory device 10 may include, in the command interface, an input buffer to detect the CS_n state. The output of the input buffer may be an input into a logic gate, such as AND logic gate that receives another input from a CommandMaskF state. The output from this logic gate (e.g., AND logic gate) may be an internal global CS_n internal signal, which may be used throughout the memory device 10. For example, this signal may be routed to command decoder 32. A first CommandMaskF state may be a logic low level that forces CS_n_internal low to mask or ignore all commands. A second CommandMaskF may be a logic high level that permits the external CS_n pin state to dictate the CS_n _internal state. The CommandMaskF state may be forced low during command mask (e.g., during PPR operations described herein).

At block 94, based on the command interface 14 being re-enabled, the memory device 10 may, via the command interface 14 and the command decoder 32, resume facilitating normal memory device operation. This operation may involve the operations described relative to block 72.

In some cases, the corruption of data may occur after performing PPR on the bank. It is noted that corrupting data after performing PPR, in some cases, may be vulnerable to current profile observations that may enable a bad actor to monitor and identify when PPR is complete to try removing power to the memory device after PPR and thereby circumnavigate the data corruption.

In some cases, the operations of FIGS. 2 and/or 3 may be temperature triggered. In these cases, the memory device 10 may sense a temperature, such as a board temperature and/or an ambient temperature. When doing so, the performance of the method 60 of FIG. 2 or method 80 of FIG. 3 may be reserved for times when the temperature data is less than or equal to a threshold. For example, DRAM memory may be relatively more retentive in colder temperatures. Therefore, a temperature threshold may be used to trigger when a DRAM memory device is to perform these additional protective operations of FIG. 2 and/or FIG. 3. To elaborate, doing so may involve the memory device 10, such as the command decoder 32, determining that the memory bank 12 corresponds to a DRAM memory, receiving sensed data corresponding to a temperature associated with an ambient environment of the memory device 10, a device temperature (e.g., board temperature) associated with the memory device 10, or both, and determining to perform the data corruption on the target portion of memory based on determining that the memory corresponding to the DRAM and based on determining that the temperature is less than or equal to a threshold. Performing operations of FIGS. 2-3 may consume additional power, so controlling performance of the operations based on a threshold may improve memory device operation by reserving use of the operations of FIG. 2 and/or FIG. 3 for those times when the DRAM memory device would benefit from increased device security (e.g., in cold enough ambient temperatures to increase data retention), which may increase efficiency of the memory device.

Systems and methods described herein may corrupt data residing within a bank and perform PPR on the bank as a way to reduce a likelihood of a wear leveling and/or row hammer attack occurring on the memory device. Data corruption and PPR may involve: entering PPR, issuing an ACT with a repair address, applying a command mask to stop issuance of memory commands, corrupting some or all of the data of a memory bank, performing PPR on the corrupted data, removing the command mask, and resuming normal memory device operation. The corruption of bank data may occur before performing PPR on the bank or concurrent (or at an at least partially overlapping time) as performing PPR on the bank. In some cases, such as where a DRAM is disposed in an ambient environment greater than a threshold temperature (e.g., sufficiently warm), the data corruption may be performed after PPR or skipped altogether. By using systems and methods described herein, increased memory device security may be realized while also maintaining and increasing reliability and overall life span of the memory device. Furthermore, systems and methods described herein may reduce a likelihood that a wear leveling attack attempt and/or a row hammer attack is successful based on obscuring PPR repair size granularity, protecting logical-to-physical address mapping data, protecting row address scramble configurations, and/or protecting wear leveling operations configurations.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]... " or "step for [perform]ing [a function]... ", it is intended that such elements are to be interpreted under 35 U.S.C. 112(f). However, for any claims containing elements designated in any other manner, it is intended that such elements are not to be interpreted under 35 U.S.C. 112(f).

## Claims

1. A device comprising:
a command interface (14) operable to:
receive a post package repair command and an indication of a target memory address from a host controller; and
disable an input to the command interface (14) based on the post package repair command; and
a command decoder (32) coupled to the command interface via a command/address bus (34), wherein the command decoder is operable to:
corrupt data corresponding to a target portion of memory based on the target memory address; and
perform post package repair on the target portion of memory based on the target memory address.

2. The device of claim 1, wherein the command interface (14) is operable to disable the input and enable the input based on:
holding an internal chip select, CS, enable signal at a logic low value; and
ignoring a repair address in response to the post package repair command being issued as a command following a most recent command of alert soft post package repair, ASPPR.

3. The device of claim 1, wherein the command interface (14) is operable to enable the input based on an indication that the command decoder (32) has completed performing the post package repair.

4. The device of claim 3, wherein the command decoder (32) is operable to generate the indication that the command decoder has completed performing the post package repair.

5. The device of any of the claims from claim 1 to 4, wherein the command decoder (32) is operable to:
corrupt the data corresponding to a plurality of portions of the target portion of memory; and
perform the post package repair on a subset of the plurality of portions based on the post package repair being performed for a respective portion of the plurality of portions after corrupting the data corresponding to that respective portion.

6. The device of any of the claims from claim 1 to 4, wherein the command decoder (32) is operable to corrupt the data corresponding to the target portion of memory based on the target memory address and determining that sensed temperature data is less than or equal to a temperature threshold.

7. The device of any of the claims from claim 1 to 6, wherein the command decoder (32) is operable to start performing the post package repair after beginning to corrupt the data.

8. The device of any of the claims from claim 1 to 7, wherein the command decoder (32) is operable to start performing the post package repair after the data is corrupted.

9. The device of any of the claims from claim 1 to 8, wherein the target memory address corresponds to a portion of an emerging memory device memory bank (12), a random access memory, RAM, a dynamic random access memory, DRAM, Double Data Rate Five Synchronous Dynamic Random-Access Memory, DDR5, Low Power Double Data Rate, LPDDR5 memory, or any combination of thereof.

10. The device of any of the claims from claim 1 to 9, wherein the command decoder (32) is operable to continue performing normal memory operations after the command interface (14) enables the input.

11. A method comprising:
receiving a post package repair command and an indication of a target memory address;
disabling an input to a command interface based on the post package repair command;
securing an indication of a mapping of logical to physical addressing associated with the target memory address based on corrupting data corresponding to a target portion of memory based on the target memory address;
performing post package repair on the target portion of memory based on the target memory address; and
enabling the input based on the post package repair and the data being corrupted.

12. The method of claim 11, wherein corrupting the data comprises:
corrupting the data corresponding to a target memory bank associated with the target memory address that is to undergo the post package repair at least in part by leaving one or more other memory banks uncorrupted.

13. The method of any of the claims from claim 11 to 12, wherein performing of the post package repair begins after beginning to corrupt the data.

14. The method of any of the claims from claim 11 to 13, wherein performing the post package repair begins after the data is corrupted.

15. The method of any of the claims from claim 11 to 14, comprising:
receiving sensed data corresponding to a temperature associated with an ambient environment, a device temperature, or both; and
determining to corrupt the data corresponding to the target portion of memory based on determining that the temperature is less than or equal to a threshold.
